# EUROPÄISCHE PATENTSCHRIFT

(11) **EP 1 797 297 B1**
(45) Veröffentlichungstag und Bekanntmachung des Hinweises auf die Patenterteilung: **16.11.2011**
(21) Anmeldenummer: 05789703.5
(22) Anmeldetag: 30.09.2005
(51) Int. Cl.: F02B 29/00, F02B 21/00, F02B 37/04

(54) **VERFAHREN UND VORRICHTUNG ZUM STEIGERN EINES DREHMOMENTS EINER HUBKOLBEN-VERBRENNUNGSMASCHINE, INSBESONDERE EINES MOTORS IN DIESELAUSFÜHRUNG**
METHOD AND DEVICE FOR INCREASING THE TORQUE OF A RECIPROCATING PISTON INTERNAL COMBUSTION ENGINE, ESPECIALLY A DIESEL ENGINE
PROCEDE ET DISPOSITIF D'AUGMENTATION DU COUPLE D'UN MOTEUR ALTERNATIF A COMBUSTION INTERNE, EN PARTICULIER D'UN MOTEUR DIESEL

(30) Priorität: 01.10.2004 DE 102004047975
(43) Veröffentlichungstag der Anmeldung: 20.06.2007
(73) Patentinhaber: KNORR-BREMSE Systeme für Nutzfahrzeuge GmbH, 80809 München (DE)
(72) Erfinder: GERUM, Eduard, 82026 Rosenheim (DE)
(74) Vertreter: Mattusch, Gundula
(86) Internationale Anmeldenummer: PCT/EP2005/010569
(87) Internationale Veröffentlichungsnummer: WO 2006/037564

(56) Entgegenhaltungen:
- WO-A-97/41346
- DE-A1- 3 737 743
- DE-A1- 10 129 976
- DE-A1- 10 224 719
- DE-A1- 10 239 110
- DE-A1- 19 913 157
- DE-C1- 19 837 094
- US-A- 5 878 714

## Beschreibung

Die Erfindung betrifft ein Verfahren und eine Vorrichtung zum Steigern eines Drehmoments einer Hubkolben-Verbrennungsmaschine, insbesondere eines Motors in Dieselausführung, mit jeweils mindestens einem Zylinder, einer Turbine, einem Verdichter, einem Luftpresser, einem Speicher, einer Ladeluftleitung, vorzugsweise einem Lufttrockner und/oder einer Ladeluftkühlung, einem Einspeiseventil und einer Steuereinrichtung.

Die Leistung von derartigen, eine Turbine und einen Verdichter aufweisenden Turboladeeinrichtungen aufgeladenen Dieselmotoren wird bei gleicher oder geringer werdender Motorgröße immer mehr gesteigert. Bei einstufig aufgeladenen Dieselmotoren, das heißt bei Motoren mit nur einer Turboladereinrichtung, muss auch in diesem Fall bei kleinen Motordrehzahlen ein ausreichender Ladedruck der Einlassluft und somit ein bestimmtes ausreichendes Drehmoment des Motors zur Verfügung stehen. Dieses Problem tritt insbesondere bei dem aktuellen "Down-Sizing" von Motoren auf, bei welchem hubraumgroße und schwere Motoren durch hubraumkleine und leichtere Motoren mit deutlich gesteigerter spezifischer Leistung ersetzt werden.

Vor allem ist dabei die Erzeugung eines hohen Drehmoments beim Anfahren und Einkuppeln, das dem größeren Motor entsprechen sollte, deshalb das zentrale Problem, das beim "Down-Sizing" zu lösen ist.

Gleichzeitig müssen Drehmoment- und Leistungsgefälle zwischen Last- und Drehzahlwechseln, die große Motoren zum Teil mit ihrem Schwungmoment überbrücken können, bei kleineren Motoren mit rasch verfügbaren erhöhten Brennraumdrücken abgefangen werden können.

Im Stand der Technik sind zur Lösung dieses Problems so genannte Turbolader mit variabler Geometrie (VNT) bekannt, die bereits bei sehr niedrigen Motordrehzahlen einen erhöhten Ladedruck und somit eine bessere Zylinderfüllung und damit eine höhere Einspritzrate von Kraftstoff ermöglichen. Hierdurch werden Motorleistung und Drehmoment erheblich gesteigert. Ein Nachteil dieser Aufladetechnik besteht darin, dass dieser VNT-Turbolader sehr kompliziert und somit teuer ist. Er weist trotz all dieser Maßnahmen immer noch einen begrenzten Aufladegrad im Niedriglastbereich und einen im Allgemeinen schlechteren Wirkungsgrad auf.

Es ist außerdem bekannt, in Fahrzeugen mit Dieselmotor mit einer Druckluftbremsanlage Druckluft aus einem, aus Sicherheitsgründen vom eigentlichen Bremssystem separierten Druckluftspeicher zu entnehmen, wobei die Versorgung dieser zusätzlichen Einblasluftmenge durch einen gegenüber dem Standard-Druckluftbremssystem vergrößerten Luftpresser erzeugt wird. Diese "Zusatzluft" wird dem Motor in der Beschleunigungsphase in das Ansaugsystem, also vor oder nach dem Turbolader zugeführt. Es ist ebenfalls bekannt, dass sich hierdurch eine Anhebung des Drehmoments im Niedriglastbereich erzielen lässt. Nachteilig ist hingegen der hohe Luftbedarf, der dadurch entsteht, dass die zusätzliche Luft nicht gezielt und getaktet den einzelnen Zylindern zugeführt wird.

Die DE 102 24 719 A1 beschreibt eine Einrichtung und ein Verfahren zum Speisen von Zylindern von aufgeladenen Verbrennungsmotoren. Eine Zusatzlufteinrichtung erzeugt variable Ladungsbewegungen in Zylindern, wobei eine Luftströmung im jeweiligen Ansaugkanal vor geöffneten Einlassventilen zum Einstellen vom Betriebszustand abhängiger Ladungsbewegungen und Füllung im Zylinder in weiteren Motorbetriebsbereichen ermöglicht. Vor einem oder mehreren Einlassventilen münden dazu ein oder mehrere gesteuerte Kanäle in den Ventildom, dem unter Zwischenschaltung eines von einem Motorsteuergerät gesteuerten Steuerventils aus einem Druckspeicher eine Zusatzluftmenge als Luftströmung zugeführt wird.

In der Schrift DE 102 39 110 A1 ist ein Aufladesystem für eine Brennkraftmaschine beschrieben, bei welcher ein zusätzlicher Speicher für Druckluft vorgesehen ist, um die spezifische Zylinderleistung der Brennkraftmaschine zu erhöhen. Der Druckluftspeicher wird von einem zweiten abgasgetriebenen Verdichter gespeist. Die von dem Druckluftspeicher abgehenden Ladeluftleitungen sind mit einem Luftzuruhrungsventil verbunden, oder die Luft wird über eine elektronisch steuerbare Dosiereinrichtung der Ansaugluft der Brennkraftmaschine zugemischt.

Die Erfindung hat daher die Aufgabe, die Motorleistung und das Drehmoment auf einfachere Weise zu steigern, als es im Stand der Technik der Fall ist, und die oben genannten Nachteile zu beheben oder wenigstens erheblich zu verringern.

Die Lösung der Aufgabe erfolgt durch das Verfahren nach Anspruch 1 und durch den Gegenstand des Anspruchs 9.

Die Erfindung schafft ein Verfahren, bei dem jedem Zylinder des Motors einzeln in der Ansaugphase im Niedriglastbereich Zusatzluft getaktet zugeführt wird.

Das Verfahren zum Steigern eines Drehmoments einer Hubkolben-Verbrennungsmaschine, insbesondere eines Motors in Dieselausführung, mit jeweils mindestens einem Zylinder, einer Turbine, einem Verdichter, einem Luftpresser, einem Speicher, einer Ladeluftkühlung in einer Ladeluftleitung, einem Lufttrockner, und einer Steuereinrichtung, ist gekennzeichnet durch die folgenden Verfahrensschritte:
- Verdichten von Luft aus einer Ladeluftleitung oder von einem zweiten Lufteinlass durch den Luftpresser ;
- Speichern der vom Luftpresser verdichteten Luft in einem Speicher; und
- Getaktetes Einblasen von Einblasluft die als Druckluft in einem Speicher gespeichert ist, in den Zylinder durch ein Einlassventil des Zylinders zur Steigerung des Drehmoments des Motors.

Hiermit wird vorteilhaft erreicht, dass die Menge der zusätzlichen Einblasluft nur in einer solchen Größenordnung verbraucht wird, die dem jeweiligen Betriebszustand des Motors entspricht. Eine Einsparung von Speicherraum für diese Einblasluft und die dazugehörige Verdichterleistung wird ebenfalls damit erzielt. Dieses Verfahren ist für Fahrzeuge mit und ohne Druckluftbremsanlage geeignet.

Es ist bei Fahrzeugen mit Druckluftbremsanlage besonders vorteilhaft, dass beim Verfahrensschritt Speichern die verdichtete Luft zunächst in einem ersten Speicher gespeist und dort gespeichert wird, und dass die in dem ersten Speicher gespeicherte Luft in einen zweiten Speicher über ein Einspeiseventil zum Speichern in dem zweiten Speicher eingespeichert wird, wenn in dem ersten Speicher eine bestimmte Luftmenge bei einem bestimmten Druck vorhanden ist.

In einer Ausführungsform der vorliegenden Erfindung wird das Einspeiseventil von der Steuereinrichtung gesteuert, wobei vorteilhaft sichergestellt wird, dass das Druckluftbremssystem keinen Druckluftverlust erleidet. Gleichzeitig ist eine Überprüfung des Drucks möglich.

In bevorzugter erfindungsgemäßer Ausführung weist der Verfahrensschritt des getakteten Einblasens folgende Teilschritte auf:
- Ermitteln des Betriebszustands des Motors und des Fahrzeugs anhand von Daten eines Motorsteuerrechners und/oder geeigneten Messwertgebern durch die Steuereinrichtung;
- Abtasten der Stellung des Einlassventils durch einen Messwertgeber und übertragen dieser Information an die Steuereinrichtung;
- Abtasten eines Drucks im zweiten Speicher durch einen Messwertgeber und/oder über einen Druckregler und eines Ladedrucks in der Ladeluftleitung und Übertragen dieser Information an die Steuereinrichtung;
- Einblasen von Einblasluft durch Aufsteuern des Steuerventils in einer Verbindungsleitung vom zweiten Speicher zum Einlassventil durch die Steuereinrichtung zum Einblasen von Einblasluft in den Zylinder, wenn das Einlassventil geöffnet wird und ein Betriebszustand des Motors im Niedriglastbereich vorliegt; und
- Beenden des Einblasens von Einblasluft in den Zylinder, wenn das Einlassventil geschlossen wird oder ein ausreichender Ladedruck des Verdichters vorhanden ist, und
- Anpassen einer erhöhten Einspritzmenge entsprechend den vorstehenden Daten.

In dieser Ausgestaltung liegt der besondere Vorteil im getakteten Einblasen der zusätzlichen Einblasluft in Abhängigkeit von der Stellung des Einlassventils und weiterer Betriebsbedingungen. Ein Einblasen von zusätzlicher Luft erfolgt vorteilhaft nur dann, wenn sie auch gebraucht wird. Somit wird eine hohe Einsparung erzielt.

In einer weiteren Ausführungsform wird im Teilschritt Einblasen ein Zeitabschnitt zum Aufsteuern des Steuerventils durch die Steuereinrichtung durch einen vorgebbaren oder gespeicherten Datenwert festgelegt. Dadurch wird erreicht, dass sich die Einblasluft der im Einlasskanal vorhandenen Strömung der Ladeluft überlagert und somit auch ein Temperaturaustausch dieser Gase erfolgen kann. Weiterhin wird durch diesen vorgebbaren Zeitabschnitt vorteilhaft erreicht, dass bei einer bestimmten Zeitdauer des Einblasens dieses früh genug beendet wird, damit kein Rückströmen der Einblasluft aus dem Zylinder in das Ansaugsystem beziehungsweise die Ladeluftleitung erfolgt und dort Störungen auslöst.

In besonders bevorzugter Ausgestaltung stellt die Steuereinrichtung die Menge der Einblasluft in Abhängigkeit von dem jeweiligen Betriebszustand des Motors und des Fahrzeugs durch den Druckregler ein. Dadurch wird eine besonders wirkungsvolle Leistungssteigerung des Motors erreicht, da die Einblasmenge von mehreren Betriebsparametern abhängig ist. Hierzu ist es weiterhin von zusätzlichem großen Vorteil, dass die Menge der Einblasluft, Steuerzeiten des Einlassventils und eine Einspritzrate von Kraftstoff in den Motor in Abhängigkeit von dem Betriebszustand des Motors von der Steuereinrichtung anhand von vorgebbaren gespeicherten Tabellenwerten aufeinander abgestimmt eingestellt werden.

Eine weitere Ausführung sieht vor, dass die Steuerzeiten und ein Hub des Einlassventils oder die Steuerzeiten oder der Hub des Einlassventils eingestellt werden.

In bevorzugter Ausgestaltung wird ein Einlass des Luftpressers über ein Umschaltventil mit einem zweiten Lufteinlass oder der Ladeluftleitung in Abhängigkeit von einem in der Ladeluftleitung herrschenden Druck jeweils verbunden. Hiermit wird die Förderleistung des Luftpressers vorteilhaft erhöht und eine Verwendung eines größeren und teureren Luftpressers vermieden.

Eine Vorrichtung zum Steigern eines Drehmoments einer Hubkolben-Verbrennungsmaschine, insbesondere eines Motors in Dieselausführung, mit jeweils mindestens einem Zylinder, einer Turbine, einem Verdichter, einem Luftpresser, einem Speicher, einer Ladeluftkühlung in einer Ladeluftleitung, vorzugsweise einem Lufttrockner, einem Einspeiseventil und einer Steuereinrichtung, ist **dadurch gekennzeichnet, dass** ein Auslass des Speichers über ein Steuerventil durch eine Lufteinblasleitung mit einem Einlasskanal im Zylinderkopf des Motors verbunden ist. Durch das Steuerventil ist es in vorteilhaft einfacher Weise möglich, die Einblasluft zu steuern, indem dieses Ventil von der Steuereinrichtung nur dann geöffnet wird, wenn auf Grund der Betriebsbedingungen eine Einblasen von Einblasluft notwendig wird.

Bei einem Fahrzeug mit Druckluftbremsanlage ist ein Einlass eines zweiten Speichers mit einem ersten Speicher über ein Einspeiseventil verbunden. Somit ist die Druckluftbremsanlage mit ihrem Speicher und ihrer Drucklufterzeugung auch für die Drucklufterzeugung der Einblasluft verwendbar, wobei der zweite Speicher eine besondere Sichterheit für die Druckluftbremsanlage darstellt, da er einen separaten Druckluftkreis für das Einblasen der in ihm gespeicherten Druckluft bildet.

In bevorzugter Ausgestaltung sind das Steuerventil und der Auslass des zweiten Speichers über einen Druckregler verbunden, wobei dieser Druckregler die Möglichkeit bietet, über Einstellung des Drucks der Einblasluft, die durch ihn beim Einblasen hindurch strömt, eine Einstellung der Menge der Einblasluft in einfacher Weise zu ermöglichen.

Es ist vorteilhaft, dass die Lufteinblasleitung über einen Einblaskanal oder eine Einblasleitung mit dem Einlasskanal verbunden ist, wobei der Einblaskanal oder die Einblasleitung im Zylinderkopf des Motors eingebracht oder im Einlasskanal angeordnet ist, da somit ein gezieltes Einblasen, beispielsweise unabhängig von den Druckverhältnissen im Ladeluftkanal, erreicht wird.

Eine weitere Ausgestaltung sieht vor, dass die Anordnung des Einblaskanals oder der Einblasleitung so ausgebildet ist, dass die Einblasluft direkt auf den Teller des Einlassventils gerichtet ist.

Eine noch weitere Ausgestaltung sieht vor, dass die Anordnung des Einblaskanals oder der Einblasleitung so ausgebildet ist, dass die Einblasluft spiralförmig über das Einlassventil geleitet ist.

Eine andere Ausgestaltungsform sieht eine Kombination der vorstehenden Ausführungen vor, indem die Anordnung des Einblaskanals oder der Einblasleitung so ausgebildet ist, dass die Einblasluft auf den Teller des Einlassventils gerichtet und spiralförmig über das Einlassventil geleitet ist.

Durch diese drei vorstehenden Ausführungen ist es möglich, eine vorteilhafte Strömung der Einblasluft an die Verhältnisse in unterschiedlich aufgebauten Zylinderköpfen von

Motoren anzupassen, wobei entsprechende Strömungsverhältnisse gemäß Vorgaben eines Motorherstellers erzielt werden.

In einer weiteren Ausführung ist in der Verbindungsleitung vom Auslass des zweiten Speichers zum Einblaskanal oder zur Einblasleitung ein Wärmetauscher angeordnet. Über diesen Wärmetauscher kann die Einblasluft erwärmt oder gekühlt werden, je nach Betriebsbedingung des Motors, wodurch sich dessen Leistungsfähigkeit vorteilhaft in gewissem Maß steigern lässt.

Die Erfindung wird mit Bezug auf die beigefügte Zeichnung anhand eines Ausführungsbeispiels erläutert. Hierbei zeigt:
- Figur 1: eine schematische Darstellung von Teilen eines Motors mit zugehörigen Komponenten mit einer beispielhaften Ausführung der erfmdungsgemäßen Vorrichtung zur Durchführung des erfindungsgemäßen Verfahrens;
- Figur 2: eine vergrößerte Schnittdarstellung des Bereichs X des Motors nach Figur 1; und
- Figur 3: eine weitere Ausführungsform der Darstellung nach Figur 2.

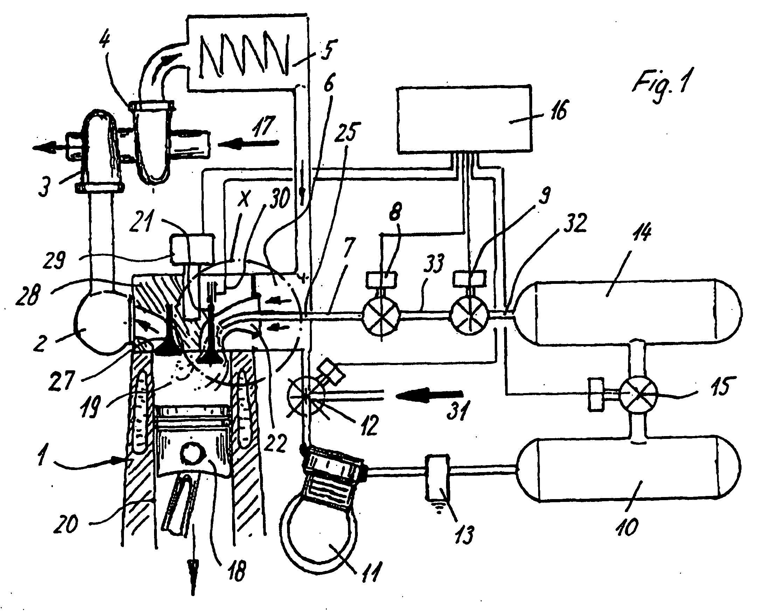

Figur 1 zeigt eine schematische Darstellung von Teilen eines Motors 1 eines nicht gezeigten Fahrzeugs mit Komponenten mit der erfindungsgemäßen Vorrichtung zur Durchführung des erfindungsgemäßen Verfahrens.

Vom Motor 1, der einen oder mehrere Zylinder aufweisen kann, ist nur ein Zylinder 20 beispielhaft mit einem in ihm verschiebbar angeordneten Hubkolben 18 in seinem oberen Bereich im Teilschnitt gezeigt. Der Zylinder 20 ist an seiner Oberseite von einem Zylinderkopf 28 verschlossen, welcher ebenfalls eines oder mehrere Einlassventil(e) 21 mit einem oder mehreren Einlasskanal(kanälen) 22 und eines oder mehrere Auslassventil(e) 27 mit einem oder mehreren Auslasskanal(kanälen) und daran angeschlossener Abgasleitung 2 aufweist. Der Zylinder 20 ist oberhalb einer nicht mehr dargestellten Kurbelwelle abgeschnitten gezeigt.

Die Ventile 21 und 27 öffnen sich nach Arbeitstakt des Motors 1 in diesem Beispiel nach unten in einen zwischen der Oberseite des Hubkolbens 18 und der Unterseite des Zylinderkopfs 28 angeordneten Brennraum 19. Es ist der so genannte Ansaugtakt dargestellt, bei dem das Einlassventil 21 geöffnet und das Auslassventil 28 geschlossen ist, und wobei sich der Hubkolben 18 in Pfeilrichtung in Richtung Kurbelwelle bewegt, um somit den Brennraum 19 zu erweitern. Die Arbeitsweise eines solchen Motors 1, insbesondere Dieselmotor, ist bekannt und wird nicht weiter erläutert.

In der Abgasleitung 2 ist in ebenfalls bekannter Weise eine Turbine 3 eines so genannten Abgasturboladers eingebaut, die einen Verdichter 4 antreibt, welcher bei Betrieb des Motors 1 Luft aus einem ersten Lufteinlass 17 ansaugt, verdichtet und über einen Ladeluftkühler 5 durch eine Ladeluftleitung 6 dem Einlasskanal 22 des Motors 1 zuführt und so in bekannter Weise das Drehmoment des Motors 1 bei bestimmten Drehzahlen und Betriebszuständen erhöht.

Die Ladeluftleitung 6, die hier schematisch vereinfacht dargestellt ist, ist weiterhin mit einem ersten Anschluss eines Umschaltventils 12 verbunden, welches mit einem zweiten Anschluss mit einem zweiten Lufteinlass 31 verbunden ist. Ein dritter Anschluss des Umschaltventils 12 steht in Verbindung mit einem Einlassanschluss eines Luftpressers 11, dessen Auslassanschluss über eine Trocknereinrichtung 13 mit einem ersten Speicher 14 verbunden ist.

Der erste Speicher 14 dient als Druckluftspeicher für eine Druckluftbremsanlage des nicht dargestellten Fahrzeugs, und wird von dem Luftpresser 11 mit Druckluft beschickt. Die zugehörige Bremsanlage ist nicht dargestellt.

Der erste Speicher 14 ist weiterhin über ein Einspeiseventil 15 mit einem zweiten Speicher 10 verbunden, der auch als ein Druckluftspeicher verwendet wird. Sein Ausgangsanschluss ist über eine Luftleitung 32 mit einem Einlass eines Druckreglers 9 verbunden, welcher seinerseits mit seinem Auslass über eine Verbindungsleitung 33 an einen Einlass eines Steuerventils 8 angeschlossen ist. Das Steuerventil 8 steht mit seinem Auslass mit einer Lufteinblasleitung 7 in Verbindung.

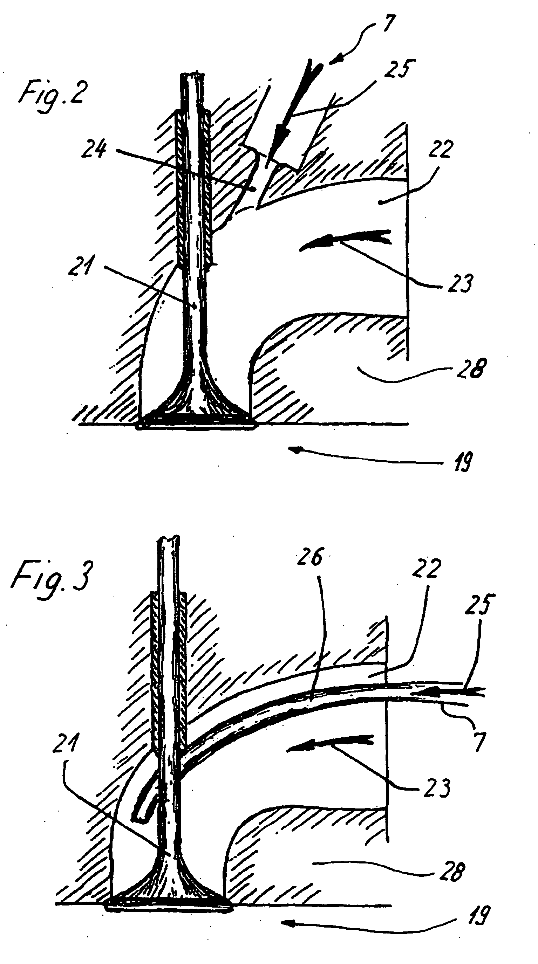

Die Lufteinblasleitung 7 führt in die Ladeluftleitung 6 in den Einlasskanal 22 zu dem Einlassventil 21. Diese Anordnung wird in einer vergrößerten Teilschnittansicht in den Figuren 2 und 3 in zwei beispielhaften Ausführungsformen dargestellt.

In Figur 2 ist die Lufteinblasleitung 7 im Zylinderkopf 28 eingebracht und mündet über einen Einblaskanal 24 in den Einlasskanal 22. Der Einblaskanal 24 ist hier so angeordnet, dass die Strömung der Einblasluft 25 auf den Ventilteller des Einlassventils 21 gerichtet ist. Mit dem Bezugszeichen 23 ist eine Einlassströmung der Einlassluft bezeichnet. Beide Luftströmungen 23 und 25 treffen in dieser Ausführung in einem Winkel aufeinander.

Eine Anordnung einer Einblasleitung 26 im Einlasskanal 22 wird in Figur 3 dargestellt. Hierbei wird die Einblasleitung 26 innerhalb des Einlasskanals 22 bis kurz vor den Ventilteller des Einlassventils 21 geführt, so dass die Einblasluft 25 hier direkt auf den Ventilteller des Einlassventils 21 trifft. Einlassströmung 23 und Einblasluft 25 treffen hier in annähernd gleicher Strömungsrichtung zusammen. Auf diese Art und Weise wird dem jeweiligen Zylinder des Motors 1 zu der Ladeluft zusätzlich so genannte Einblasluft 25 im Ansaugtakt zugeführt, wodurch das Drehmoment des Motors 1 in bestimmten Betriebszuständen vergrößert wird.

Die Steuerung der Ventile 8, 9, 12, 15 wird von einer Steuereinrichtung 16 durchgeführt, die in Figur 1 als Block dargestellt ist. Sie ist mit den Ventilen 8, 9, 12, 15 beispielsweise über elektrische Verbindungsleitungen verbunden, wobei die Ventile 8; 9, 12, 15 als Elektromagnetventile ausgeführt sind.

Weiterhin ist die Steuereinrichtung 16 mit jeweils einem Messwertgeber 30 pro Einlassventil 21 elektrisch verbunden. Dieser Messwertgeber 30 tastet die jeweilige Position des Einlassventils 21 ab und wandelt sie in bekannter Weise in ein elektrisches Signal um, das der Steuereinrichtung 16 zugeleitet wird.

An die Steuereinrichtung 16 ist jeweils ein Stellglied 29 pro Zylinder angeschlossen, das sich am Motor 1 befindet. Es handelt sich in diesem Ausführungsbeispiel um eine Einspritzeinrichtung für Kraftstoff. Weitere Messwertgeber für Temperatur, Druck etc. können auch in ihr enthalten sein. Die Steuereinrichtung 16 enthält einen so genannten Motorsteuerrechner oder ist mit diesem verbunden. Von ihm erhält die Steuereinrichtung 16 notwendige Informationen über den Betriebszustand des Motors 1 und der Fahrzeugs, wie beispielsweise Drehzahl und Belastung des Motors 1, Fahrgeschwindigkeit des Fahrzeugs, Temperaturen von Motor 1, der Einlassluft, des Abgases und dergleichen.

Im Weiteren wird nun die Funktion der einzelnen Komponenten zur Erläuterung des erfindungsgemäßen Verfahrens näher beschrieben.

Der Luftpresser 11 verdichtet Luft, die an seinen Einlass über das Umschaltventil 12 entweder von einem zweiten Lufteinlass 31 oder von der Ladeluftleitung 6 zugeführt wird. Beim Anlassen des Motors 1, bei niedrigen Motordrehzahlen oder bei bestimmten Betriebszuständen des Motors 1 und/oder des Fahrzeugs verbindet das Umschaltventil 12 den Luftpresser mit dem zweiten Lufteinlass 31. In normalen Betriebszuständen des Motors 1, in denen ausreichend Ladeluft von dem Verdichter 4 des Turboladers geliefert wird, verbindet das Umschaltventil 12 den Luftpresser 11 mit der Ladeluftleitung 6, so dass dadurch die Förderleistung des Luftpressers 11 vorteilhaft erhöht und die Installation eines größeren und teureren Luftpressers 11 sowie eine Änderung des Bremssystems vermieden wird.

Die vom Luftpresser 11 verdichtete Luft wird von der Trocknereinrichtung 13 in bekannter Weise für die Verwendung von Druckluft in einer Druckluftbremsanlage getrocknet und im ersten Speicher 10 gespeichert. Ein nicht dargestellter Anschluss am ersten Speicher 10 führt die in ihm gespeicherte Druckluft für die Verwendung in der ebenfalls nicht dargestellten Druckluftbremsanlage des Fahrzeugs zu.

Wenn die Druckluftbremsanlage ausreichend mit Druckluft versorgt wird, was durch nicht dargestellte Druckgeber der Steuereinrichtung 16 übermittelt wird, wird der zweite Speicher 14 über das Einspeiseventil 15 mit Druckluft aus dem ersten Speicher 10 gefüllt. Das Einspeiseventil 15 hat für die Druckluftbremsanlage die Funktion eines absichernden Ventils, damit auf diesem Wege kein Druckluftverlust derselben erfolgen kann. Hierbei vergleicht die Steuereinrichtung den vom Druckgeber gelieferten Wert mit einem vorgebbaren Sollwert und schaltet das Einspeiseventil 15 entsprechend ein oder aus. Das Einspeiseventil 15 kann auch autonom ausgebildet sein.

Der Druckregler 9 am Auslass des zweiten Speichers 14 öffnet und schließt automatisch in Abhängigkeit vom Druck im Innern des zweiten Speichers 14. Auch hierbei kann über einen Messwertgeber und einen Druckregler in elektrischer Ausführung eine Steuerung durch die Steuereinrichtung 16 erfolgen, was durch eine Verbindungslinie in der Figur 1 angedeutet ist.

Beim Ansaugtakt des jeweiligen Zylinders 20 wird über das durch die Steuereinrichtung 16 gesteuerte Steuerventil 8 die Druckluft aus dem zweiten Speicher 14 über den Lufteinblaskanal 7 dem jeweiligen Zylinder 20 des Motors 1 über das in diesem Zeitpunkt geöffnete Einlassventil 21 zugeführt. Mittels des Messwertgebers 30 wird in diesem Ausführungsbeispiel die Stellung des Einlassventils 21 abgetastet. Bei wieder geschlossenem Einlassventil 21 wird der Steuereinrichtung 16 diese Stellung über den Messwertgeber 30 übermittelt, so dass die Steuereinrichtung 16 dementsprechend das Steuerventil 8 wieder in eine Verschlussstellung steuert.

Die Taktzeiten des Einblasbeginns und -endes der zusätzlichen Einblasluft 25 aus dem zweiten Speicher 14 sind so gewählt und der Steuereinrichtung vorgebbar, dass sich die Einblasluft 25 der im Einlasskanal 22 vorhandenen Einlassströmung 23 überlagert. Das Einblasende ist so festgelegt beziehungsweise der Steuereinrichtung 16 vorgebbar, dass mit Schließen des Einlassventils 21 kein Rückströmen der Einblasluft 25 aus dem Zylinder 20 in die Ladeluftleitung 6 erfolgt.

Durch dieses getaktete Einblasen der Einblasluft 25 in den Brennraum 19 eines jeweiligen Zylinders 20 des Motors 1 kann die so genannte Zylinderfüllung des Brennraums 19 des Zylinders 20 abhängig von dem eingeblasenen Volumen der Einblasluft 25 erheblich erhöht werden. Maßgeblich für das eingeblasene Volumen der Einblasluft 25 ist neben der Taktzeit, die durch die Steuerung der Steuerzeit des Einlassventils 21, beispielsweise über eine nicht dargestellte bekannte Nockenwelle des Motors 1, vorgegeben ist, auch der Querschnitt des Einblaskanals 24 und der Einblasleitung 26 sowie der Druck im zweiten Speicher 10.

Der Druck im zweiten Speicher 10 beziehungsweise der Druck nach dem Druckregler 9 stellt eine variable Größe zur Änderung der Menge der Einblasluft 25 dar. Die Einstellung dieses Drucks wird von der Steuereinrichtung 16 ausgeführt, beispielsweise über vorgebbare Einstellwerte oder über Daten, die in einer Tabelle in einer Speichereinrichtung in der Steuereinrichtung 16 gespeichert sind. Diese Tabellendaten entsprechen jeweils dem aktuellen Betriebszustand des Motors 1 und/oder des Fahrzeugs. Somit kann für jeden Betriebszustand die entsprechende Menge an zusätzlicher Einblasluft 25 ermittelt und dem Zylinder 20 zugeführt werden.

Die höhere Zylinderfüllung ermöglicht nun vorteilhaft eine höhere Einspritzrate von Kraftstoff in den Brennraum 19 des Zylinders 20 und führt so zu einer deutlichen vorteilhaften Leistungsanhebung des Motors 1.

Durch Integration des von der Steuereinrichtung 16 getakteten Steuerventils 8 und des (auch optionalen) Druckreglers 9 in eine gesamte Motorsteuerungselektronik des Motorsteuerrechners lassen sich die Menge der Einblasluft 25 und eine Erhöhung der Einspritzrate von Kraftstoff vorteilhaft exakt aufeinander abstimmen, beispielsweise anhand der oben erwähnten in der Speichereinrichtung 16 gespeicherten Tabellenwerte.

Bei der höheren Leistung des Motors 1 entsteht in dem so genannten, auf diese oben beschriebene Weise aufgeladenen Zylinder 20 eine größere Abgasmenge, die in die Abgasleitung 2 abgeführt wird und somit unmittelbar zur Beschleunigung der Turbine 3 des Turboladers führt.

Hierdurch ist es gewährleistet, dass nach bereits wenigen Umdrehungen der Kurbelwelle des Motors 1 mit der zusätzlichen Menge an Einblasluft 25 der Turbolader entsprechend früher "anläuft" und in Folge den Motor mit ausreichendem Ladedruck durch die Ladeluftleitung 6 versorgt.

Nach Erreichen eines ausreichenden Ladedrucks wird die zusätzliche Einblasluft 25 über das Steuerventil 8 von der Steuereinrichtung 16 sofort abgeschaltet.

Sollte im dynamischen Betrieb des Motors 1, zum Beispiel in Beschleunigungsphasen, der Ladedruck unter ein gewünschtes, ebenfalls der Steuereinrichtung 16 vorgebbares Maß abfallen, so kann in diesen Phasen die Steuereinrichtung 16 das Zuführen von zusätzlicher Einblasluft beliebig aktivieren.

Somit kann in vorteilhafter Weise bei Vorliegen eines Motorkennfeldes, beispielsweise in Tabellenwerten der Speichereinrichtung der Steuereinrichtung 16, für jeden beliebigen Betriebszustand des Motors 1 und des Fahrzeugs die notwendige Menge an zusätzlicher Einblasluft 25 und eine entsprechend erhöhte Einspritzmenge an Kraftstoff von der Steuereinrichtung 16 ermittelt und dem Motor 1 jeweils zugeführt werden, wodurch dieses eine vorteilhafte Leistungssteigerung des Motors 1 ermöglicht.

Die Erfindung ist nicht auf das oben beschriebene Ausführungsbeispiel beschränkt.

So ist es denkbar, dass der Einblaskanal 24 oder die Einblasleitung 26 so angeordnet werden kann, dass die Einblasluft 25 direkt auf den Ventilteller des Einlassventils 21 trifft und so mit einer so genannten "Tumble"-Strömung in den Brennraum 19 des Zylinders 20 einströmt.

Der Einblaskanal 24 oder die Einblasleitung 26 können auch so angeordnet werden, dass die Einblasluft 25 spiralförmig über das Einlassventil 21 geführt wird und dadurch im Brennraum 19 einen um die Längsachse des Zylinders 20 rotierenden Luftdrall erzeugt.

Die Einblasluft 25 kann auch so geführt werden, dass sich eine Überlagerung von "Tumble"- und Drallströmung ergibt.

Weiterhin ist denkbar, dass das Einspeiseventil 15 als ein autonomes Ventil ausgebildet ist, welches für Druckluftanlagen oft Verwendung findet.

Das Stellglied 29 kann auch mit einer Stelleinrichtung für Steuerzeiten der Nockenwelle gekoppelt sein.

Weiterhin ist die Erfindung auf Motoren 1 mit einem oder mehreren Zylindern 20 mit einem oder mehreren Einlassventilen 21 anwendbar, wobei die Ausführung des Motors 1 nicht auf einen Dieselmotor beschränkt ist.

Es ist weiterhin denkbar, dass die Einblasluft 25 vor dem Einblasen in den Zylinder 25 einen Wärmetauscher durchläuft, damit ihre Temperatur dem jeweiligen Betriebszustand des Motors 1 optimal angepasst werden kann.

Außerdem kann ein Fahrzeug ohne Druckluftbremsanlage anstelle von zwei Speichern 10 und 14 nur den zweiten Speicher 14 aufweisen, wobei das Einspeiseventil 15 entfallen kann.

### Bezugszeichen

- 1: Motor
- 2: Abgasleitung
- 3: Turbine
- 4: Verdichter
- 5: Ladeluftkühler
- 6: Ladeluftleitung
- 7: Lufteinblaskanal
- 8: Steuerventil
- 9: Druckregler
- 10: Erster Speicher
- 11: Luftpresser
- 12: Umschaltventil
- 13: Trocknereinrichtung
- 14: Zweiter Speicher
- 15: Einspeiseventil
- 16: Steuereinrichtung
- 17: Erster Lufteinlass
- 18: Hubkolben
- 19: Brennraum
- 20: Zylinder
- 21: Einlassventil
- 22: Einlasskanal
- 23: Einlassströmung
- 24: Einblaskanal
- 25: Einblasluft
- 26: Einblasleitung
- 27: Auslassventil
- 28: Zylinderkopf
- 29: Stellglied
- 30: Messwertgeber
- 31: Zweiter Lufteinlass
- 32: Luftleitung
- 33: Verbindungsleitung

## Patentansprüche

1. Verfahren zum Steigern eines Drehmoments einer Hubkolben-Verbrennungsmaschine, insbesondere eines Motors (1) in Dieselausführung, mit jeweils mindestens einem Zylinder (20), einer Turbine (3), einem Verdichter (4), einem Luftpresser (11), einem Speicher (10, 14), einer Ladeluftkühlung (5) in einer Ladeluftleitung (6), einem Lufttrockner (13), und einer Steuereinrichtung (16), mit folgenden Verfahrensschritten:
(a) Verdichten von Luft aus einer Ladeluftleitung (6) oder von einem zweiten Lufteinfass (31) durch den Luftpresser (11);
(b) Speichern der vom Luftpresser (11) verdichteten Luft in einem Speicher (10, 14); und
(c) Getaktetes Einblasen von Einblasluft (25), die als Druckluft in einem Speicher (10, 14) gespeichert ist, in den Zylinder (20) durch ein Einlassventil (21) des Zylinders (20) zur Steigerung des Drehmoments des Motors (1),
**dadurch gekennzeichnet, dass** der Verfahrensschritt (c) folgende Teilschritte aufweist:
(c1) Ermitteln des Betriebszustands des Motors (1) und des Fahrzeugs anhand von Daten eines Motorsteuerrechners und/oder geeigneten Messwertgebem durch die Steuereinrichtung (16);
(c2) Abtasten der Stellung des Einlassventils (21) durch einen Messwertgeber (30) und übertragen dieser Information an die Steuereinrichtung (16);
(c3) Abtasten eines Drucks im zweiten Speicher (14) durch einen Messwertgeber und/oder über einen Druckregler (9) und eines Ladedrucks in der Ladeluftleitung (6) und Übertragen dieser Information an die Steuereinrichtung (16);
(c4) Einblasen von Einblasluft durch Aufsteuem des Steuerventils (8) in einer Verbindungsleitung vom zweiten Speicher (14) zum Einlassventil (21) durch die Steuereinrichtung (16) zum Einblasen von Einblasluft (25) in den Zylinder (20), wenn das Einlassventil (21) geöffnet wird und ein Betriebszustand des Motors (1) im Niedriglastbereich vorliegt; und
(c5) Beenden des Einblasens von Einblasluft (25) in den Zylinder (20), wenn das Einlassventil (21) geschlossen wird oder ein ausreichender Ladedruck des Verdichters (4) vorhanden ist,
wobei eine Lufteinblasleitung (7) über einen Einblaskanal (24) oder eine Einblasleitung (26) mit einem Einlasskanal (22) in einem Zylinderkopf (28) des Motors (1) verbunden ist, wobei der Einblaskanal (24) oder die Einblasleitung (26) im Zylinderkopf (28) des Motors (1) eingebracht oder im Einlasskanal (22) angeordnet ist.

2. Verfahren nach Anspruch 1, **dadurch gekennzeichnet, dass** beim Verfahrensschritt (b) die verdichtete Luft zunächst in einem ersten Speicher (10) gespeist und dort gespeichert wird, und dass die in dem ersten Speicher (10) gespeicherte Luft in einen zweiten Speicher (14) über ein Einspeiseventil (15) zum Speichern in dem zweiten Speicher (14) eingespeichert wird, wenn in dem ersten Speicher (10) eine bestimmte Luftmenge bei einem bestimmten Druck vorhanden ist.

3. Verfahren nach Anspruch 2, **dadurch gekennzeichnet, dass** das Einspeiseventil (15) von der Steuereinrichtung (16) gesteuert wird.

4. Verfahren nach einem der Ansprüche 1 bis 3, **dadurch gekennzeichnet, dass** im Teilschritt (c4) ein Zeitabschnitt zum Aufsteuem des Steuerventils (8) durch die Steuereinrichtung (16) durch einen vorgebbaren oder gespeicherten Datenwert festgelegt wird.

5. Verfahren nach einem der Ansprüche 1 bis 4, **dadurch gekennzeichnet, dass** die Steuereinrichtung (16) die Menge der Einblasluft (25) in Abhängigkeit von dem jeweiligen Betriebszustand des Motors (1) und des Fahrzeugs durch den Druckregler (9) einstellt.

6. Verfahren nach einem der Ansprüche 1 bis 5, **dadurch gekennzeichnet, dass** die Menge der Einblasluft (25), Steuerzeiten des Einlassventils (21) und eine Einspritzrate von Kraftstoff in den Motor (1) in Abhängigkeit von dem Betriebszustand des Motors (1) von der Steuereinrichtung (16) anhand von vorgebbaren gespeicherten Tabellenwerten aufeinander abgestimmt eingestellt werden.

7. Verfahren nach Anspruch 6, **dadurch gekennzeichnet, dass** die Steuerzeiten und ein Hub des Einlassventils (21) oder die Steuerzeiten oder der Hub des Einlassventils (21) eingestellt werden.

8. Verfahren nach einem der Ansprüche 1 bis 7, **dadurch gekennzeichnet, dass** ein Einlass des Luftpressers (11) über ein Umschaltventil (12) mit einem zweiten Lufteinlass (31) oder der Ladeluftleitung (6) in Abhängigkeit von einem in der Ladeluftleitung (6) herrschenden Druck jeweils verbunden wird.

9. Vorrichtung zum Steigern eines Drehmoments einer Hubkolben-Verbrennungsmaschine, insbesondere eines Motors (1) in Dieselausführung, mit jeweils mindestens einem Zylinder (20), einer Turbine (3), einem Verdichter (4), einem Luftpresser (11), einem Speicher (10, 14), einer Ladeluftkühlung (5) in einer Ladeluftleitung (6), einem Lufttrockner (13), einem Einspeiseventil (15) und einer Steuereinrichtung (16), wobei ein Auslass des Speichers (10, 14) über ein Steuerventil (8) durch eine Lufteinblasleitung (7) mit einem Einlasskanal (22) im Zylinderkopf (28) des Motors (1) verbunden ist, die Lufteinblasleitung (7) über einen Einblaskanal (24) oder eine Einblasleitung (26) mit dem Einlasskanal (22) verbunden ist, wobei der Einblaskanal (24) oder die Einblasleitung (26) im Zylinderkopf (28) des Motors (1) eingebracht oder im Einlasskanal (22) angeordnet ist,
**dadurch gekennzeichnet, dass** ein Einlass eines zweiten Speichers (14) mit einem ersten Speicher (10) über ein Einspeiseventil (15) verbunden ist und die Anordnung des Einblaskanals (24) oder der Einblasleitung (26) so ausgebildet ist, dass die Einblasluft (25) auf den Teller des Einlassventils (21) gerichtet und spiralförmig über das Einlassventil (21) geleitet ist.

10. Vorrichtung nach Anspruch 9, **dadurch gekennzeichnet, dass** das Steuerventil (8) und der Auslass des zweiten Speichers (14) über einen Druckregler (9) verbunden sind.

11. Vorrichtung nach Anspruch 9 oder 10, **dadurch gekennzeichnet, dass** in der Verbindungsleitung vom Auslass des zweiten Speichers (14) zum Einblaskanal (24) oder zur Einblasleitung (26) ein Wärmetauscher angeordnet ist.

## Claims

1. Method for increasing the torque of a reciprocating piston internal combustion engine, in particular of a diesel engine (1), having in each case at least one cylinder (20), one turbine (3), one compressor (4), one air compressor (11), one storage device (10, 14), one charge air cooler (5) in a charge air line (6), one air dryer (13), and one control device (16), having the following method steps:
(a) compression of air from a charge air line (6) or from a second air inlet (31) by the air compressor (11);
(b) storage of the air compressed by the air compressor (11) in a storage device (10, 14); and
(c) clocked blowing in of blow air (25), which is stored as compressed air in a storage device (10, 14), into the cylinder (20) through an inlet valve (21) of the cylinder (20) to increase the torque of the engine (1),
**characterized in that** the method step (c) has the following substeps:
(c1) determination of the operating state of the engine (1) and of the vehicle by means of data from an engine control computer and/or suitable measured value signal transmitters by means of the control device (16);
(c2) sensing of the position of the inlet valve (21) by means of a measured value signal transmitter (30) and transmitting this information to the control device (16);
(c3) sensing a pressure in the second storage device (14) by means of a measured value signal transmitter and/or by means of a pressure regulator (9) and a charge pressure in the charge air line (6) and transmitting this information to the control device (16);
(c4) blowing in of blow air into the cylinder (20) by opening the control valve (8) in a connecting line from the second storage device (14) to the inlet valve (21) by means of the control device (16) in order to blow in blow air (25), if the inlet valve (21) is opened and an operating state of the engine (1) in the low load range is present; and
(c5) terminating the blowing in of blow air (25) into the cylinder (20) if the inlet valve (21) is closed or there is a sufficient charge pressure of the compressor (4);
wherein an air blowing in line (7) is connected to an inlet duct (22) in a cylinder head (28) of the engine (1) via a blowing in duct (24) or a blowing in line (26), the blowing in duct (24) or the blowing in line (26) being mounted in the cylinder head (28) of the engine (1) or being arranged in the inlet duct (22).

2. Method according to Claim 1, **characterized in that** in the method step (b) the compressed air is firstly fed into a first storage device (10) and stored there, and **in that** the air which is stored in the first storage device (10) is fed into a second storage device (14) via a feed valve (15) for storage in the second storage device (14) if a specific quantity of air is present at a specific pressure in the first storage device (10).

3. Method according to Claim 2, **characterized in that** the feed valve (15) is controlled by the control device (16).

4. Method according to one of Claims 1 to 3, **characterized in that** in the substep (c4) a time segment for opening the control valve (8) is defined by the control device (16) by means of a predefinable or stored data value.

5. Method according to one of Claims 1 to 4, **characterized in that** the control device (16) adjusts the quantity of blow air (25) as a function of the respective operating state of the engine (1) and of the vehicle by means of the pressure regulator (9).

6. Method according to one of Claims 1 to 5, **characterized in that** the quantity of blow air (25), the control times of the inlet valve (21) and an injection rate of fuel into the engine (1) are adjusted so as to be matched to one another by the control device (16) as a function of the operating state of the engine (1) by means of predefinable stored table values.

7. Method according to Claim 6, **characterized in that** the control times and a stroke of the inlet valve (21) or the control times or the stroke of the inlet valve (21) are adjusted.

8. Method according to one of Claims 1 to 7, **characterized in that** an inlet of the air compressor (11) is respectively connected via a changeover valve (12) to a second air inlet (31) or to the charge air line (6) as a function of a pressure prevailing in the charge air line (6).

9. Device for increasing a torque of a reciprocating piston internal combustion engine, in particular of a diesel engine (1), having in each case at least one cylinder (20), one turbine (3), one compressor (4), one air compressor (11), one storage device (10, 14), one charge air cooler (5) in a charge air line (6), one air dryer (13), one feed valve (15) and one control device (16), wherein an outlet of the storage device (10, 14) is connected to an inlet duct (22) in the cylinder head (28) of the engine (1) through an air blowing in line (7) via a control valve (8) the air blowing in line (7) is connected to the inlet duct (22) via a blowing in duct (24) or a blowing in line (26), the blowing in duct (24) or the blowing in line (26) being mounted in the cylinder head (28) of the engine (1) or being arranged in the inlet duct (22), **characterized in that** an inlet of a second storage device (14) is connected to a first storage device (10) via a feed valve (15) and the arrangement of the blowing in duct (24) or of the blowing in line (26) is embodied such that the blow air (25) is aimed at the disk of the inlet valve (21) and is directed via the inlet valve (21) in a spiral shape.

10. Device according to Claim 9, **characterized in that** the control valve (8) and the outlet of the second storage device (14) are connected via a pressure regulator (9).

11. Device according to Claim 9 or 10, **characterized in that** a heat exchanger is arranged in the connecting line from the outlet of the second storage device (14) to the blowing in duct (24) or to the blowing in line (26).

## Revendications

1. Procédé d'augmentation du couple d'un moteur à combustion interne à pistons, notamment d'un moteur (1) en réalisation diesel, comprenant respectivement au moins un cylindre (20), une turbine (3), un compresseur (4), un compresseur d'air (11), un accumulateur (10, 14), un refroidisseur (5) d'air de suralimentation dans un conduit (6) d'air de suralimentation, un sécheur (13) d'air et un dispositif (16) de commande, ayant les stades de procédé suivantes :
(a) compression d'air provenant d'un conduit (6) d'air de suralimentation ou d'une deuxième admission (31) d'air par le compresseur (11) d'air ;
(b) accumulation de l'air comprimé par le compresseur (11) d'air dans un accumulateur (10, 14) ; et
(c) insufflation cadencée d'air (25) d'insufflation, qui est accumulé sous la forme d'air comprimé dans un accumulateur (10, 14), dans le cylindre (20) par une soupape (21) d'admission du cylindre (20) pour augmenter le couple du moteur (1),
**caractérisé en ce que** le stade (c) du procédé comporte les sous-stades suivantes :
(c1) détermination de l'état de fonctionnement du moteur (1) et du véhicule au moyen de données d'un ordinateur de commande du moteur et/ou d'indicateurs approprié de valeurs de mesure par le dispositif (16) de commande ;
(c2) analyse de la position de la soupape (21) d'admission par un indicateur (30) de valeurs de mesure et transmission de cette information au dispositif (16) de commande ;
(c3) analyse d'une pression dans le deuxième accumulateur (14) par un indicateur de valeurs de mesure et/ou par un régulateur (9) de pression et d'une pression de suralimentation dans le conduit (6) d'air de suralimentation et transmission de cette information au dispositif (16) de commande ;
(c4) insufflation d'air d'insufflation par commande de la
vanne (8) de commande dans un conduit de liaison allant du deuxième accumulateur (14) à la soupape (21) d'admission par le dispositif (16) de commande pour l'insufflation d'air (25) d'insufflation dans le cylindre (20), lorsque la soupape (21) d'admission est ouverte et lorsqu'un état de fonctionnement du moteur (1) se trouve dans la zone de charge basse ; et
(c5) mettre fin à l'insufflation d'air (25) d'insufflation dans le cylindre (20), lorsque la soupape (21) d'admission est fermée ou lorsqu'une pression de suralimentation suffisante du compresseur (4) est présente,
dans lequel un conduit (7) d'insufflation d'air communique avec un canal (22) d'admission dans une culasse (28) du moteur (1) par un canal (24) d'insufflation ou par un conduit (26) d'insufflation ayant un canal (22) d'insufflation, le canal (24) d'insufflation ou le conduit (26) d'insufflation étant introduit dans la culasse (28) du moteur (1) ou dans le canal (22) d'admission.

2. Procédé suivant la revendication 1, **caractérisé en ce que**, dans le stade (b) du procédé, l'air comprimé est envoyé d'abord dans un premier accumulateur (10) et y est accumulé, et **en ce que** l'air accumulé dans le premier accumulateur est envoyé dans un deuxième accumulateur (14) par une vanne (15) d'alimentation pour l'alimentation du deuxième accumulateur (14), lorsqu'il y a dans le premier accumulateur (10) une quantité d'air déterminée à une pression déterminée.

3. Procédé suivant la revendication 2, **caractérisé en ce que** la vanne (15) d'alimentation est commandée par le dispositif (16) de commande.

4. Procédé suivant l'une des revendications 1 à 3, **caractérisé en ce que**, dans le sous-stade (c4), on fixe, par une valeur de données pouvant être prescrite ou mémorisée, un laps de temps pour la commande de la vanne (8) de commande par le dispositif (16) de commande.

5. Procédé suivant l'une des revendications 1 à 4, **caractérisé en ce que** le dispositif (16) de commande règle par le régulateur (9) de pression la quantité d'air (25) d'insufflation en fonction de l'état de fonctionnement respectif du moteur (1) et du véhicule.

6. Procédé suivant l'une des revendications 1 à 5, **caractérisé en ce que** la quantité de l'air (25) d'insufflation, les temps de commande de la soupape (21) d'admission et un taux d'injection de carburant dans le moteur (1) sont réglés de manière adaptée les uns aux autres en fonction de l'état de fonctionnement du moteur (1) par le dispositif (16) de commande au moyen de valeurs de table, qui peuvent être prescrites et qui sont mémorisées.

7. Procédé suivant la revendication 6, **caractérisé en ce qu'**on règle les temps de commande et une course de la soupape (21) d'admission ou les temps de commande ou la course de la soupape (21) d'admission.

8. Procédé suivant l'une des revendications 1 à 7, **caractérisé en ce qu'**une admission du compresseur (11) d'air est reliée respectivement par une vanne (12) de commutation à une deuxième admission (31) d'air ou au conduit (6) d'air de suralimentation en fonction d'une pression régnant dans le conduit (6) d'air de suralimentation.

9. Dispositif d'augmentation du couple d'un moteur à combustion à pistons, notamment d'un moteur (1) en réalisation diesel, comprenant respectivement au moins un cylindre (20), une turbine (3), un compresseur (4), un compresseur (11) d'air, un accumulateur (10, 14), un refroidissement (5) d'air de suralimentation dans un conduit (6) d'air de suralimentation, un sécheur (13) d'air, une vannee (15) d'alimentation et un dispositif (16) de commande, dans lequel une sortie de l'accumulateur (10, 14) communique avec un canal (22) d'admission de la culasse (28) du moteur (1) par un conduit (7) d'injection d'air par l'intermédiaire d'une vanne (8) de commande, le conduit (7) d'insufflation d'air communiquant avec le canal (22) d'admission par un canal (24) d'insufflation ou par un conduit (26) d'insufflation, le canal (24) d'insufflation ou le conduit (26) d'insufflation étant introduit dans la culasse (28) du moteur (1) ou étant disposé dans le canal (22) d'admission,
**caractérisé en ce qu'**une entrée d'un deuxième accumulateur (14) communique avec un premier accumulateur (10) par une vanne (15) d'alimentation et l'agencement du canal (24) d'insufflation ou du conduit (26) d'insufflation est tel que l'air (25) d'insufflation est dirigé sur le champignon de la soupape (21) d'admission et est guidé en spirale sur la soupape (21) d'admission.

10. Dispositif suivant la revendication 9, **caractérisé en ce que** la vanne (8) de commande et la sortie du deuxième accumulateur communiquent par un régulateur (9) de pression.

11. Dispositif suivant la revendication 9 ou 10, **caractérisé en ce qu'**un échangeur de chaleur est monté dans le conduit de liaison allant de la sortie du deuxième accumulateur (14) au canal (24) d'insufflation ou au conduit (26) d'insufflation.
